# EUROPEAN PATENT APPLICATION

(11) **EP 3 208 244 A1**
(43) Date of publication of application: **23.08.2017**
(21) Application number: 16156641.9
(22) Date of filing: 22.02.2016
(51) Int. Cl.: C03B 7/02, F23M 5/02

(54) **FOREHEARTH COMPRISING EXCHANGEABLE SUPPORT BLOCKS**

(71) Applicant: 3B Fibreglass sprl, 4651 Battice (BE)
(72) Inventor: Lecrenier, Pascal, 4651 Battice (BE); Faway, José, 4651 Battice (BE); Vanwynsberghe, Frédéric, 4651 Battice (BE); Lecrenier, Raphael, 4651 Battice (BE)
(74) Representative: BiiP cvba

(57) **Abstract**

The present invention concerns a glass fibre manufacturing plant comprising a front end or forehearth forming a passage for conveying molten glass and defined by a first and second opposite longitudinal walls, wherein each longitudinal wall is made of a refractory masonry comprising a cavity of width, Wc, and height, H1c, formed by a floor defined by a base wall, by lateral walls defined by two spacer bricks and by a ceiling defined by a lintel resting on each of the two spacer bricks, and further comprising a support block (20) comprising a hot cuboid portion of width, w, and height, h, wherein w < Wc, and h < Hlc, said hot cuboid portion being reversibly inserted in the cavity, thus defining a gap surrounding the hot cuboid portion of the support block when positioned in the cavity, said gap being filled with a resilient material (29), said front end being characterized in that, the masonry comprises a spacing element hindering the thermal expansion of the two spacer bricks, such that the distance, Wc, between said two spacer bricks measured at room temperature cannot be reduced below a predetermined hot cavity width, W, at said service temperature, hT, wherein said predetermined distance, W, is larger than the width, w, of the hot cuboid portion of the support block.

## Description

### TECHNICAL FIELD

The present invention concerns glass fibre manufacturing plants comprising a front end forming a passage for conveying molten glass from a melting furnace to a series of bushings. Said front end comprises longitudinal walls made of a refractory masonry including a number of support blocks for supporting a burner, a pressure or temperature measurement device, a peep hole or camera, a gun for injecting a fluid into the passage, an atmospheric beam, and the like. The gist of the present invention is that the support blocks can be reversibly inserted and removed from the masonry of the longitudinal walls without having to cool the front end, and without having to destroy part of the masonry surrounding the support blocks.

### BACKGROUND OF THE INVENTION

A glass fibre manufacturing plant comprises a melter or furnace for melting pre-mixed and pre-dosed batch materials to form a molten (i.e., liquid) glass composition. The molten glass composition is fiberized by drawing the glass melt through a number of bushings distributed in a frontend or forehearth, The frontend consists of at least one passage, generally divided into several passages, for conveying molten glass from the melter to the bushings and comprising a first and second opposite longitudinal walls, a ceiling, a bottom floor, and an end wall. The pressure and thermal conditions within the frontend must be carefully controlled in order to ensure that the molten glass reaches each bushing at the right temperature, pressure, and composition, required for a successful formation of the glass fibres.

For this reason, frontends are equipped with burners for ensuring an optimal temperature of the glass melt, with temperature and pressure measurement devices for monitoring the temperature and pressure within the frontend, with peepholes or cameras for an optical control of the frontend, with fluid injection guns for locally controlling turbulences or temperature peaks, and even with atmospheric beams extending across the passages defined by the frontend for controlling the gas flows within the frontend. In order to provide all this equipment to the front end, the longitudinal walls and end walls, sometimes even the ceiling, are equipped with support blocks integrated in the masonry of said walls, which are specifically designed for receiving the foregoing equipment. The support blocks are integrated into the masonry during the building of the frontend and cannot be removed easily during use, without interrupting production and dismantling the masonry surrounding a support block to be removed. Such operation can paralyse the activity of a passage of frontend during more than a week.

Burners are distributed along the longitudinal walls, at regularly spaced, predefined positions. A support block supporting a burner is called a burner block, and burners can easily be mounted in and removed from a burner block. Burner blocks, however, can wear during service. In particular when oxygen-fuel burners, often referred to as oxy-burners, are used instead of traditional air-fuel burners, because the temperature of the flame of oxy-burners is substantially higher than the one of traditional air-fuel burners. If a burner block is damaged, it must be replaced, yielding an interruption of production of at least one week.

Measurement blocks for supporting measurement equipment, peep hole blocks and camera blocks for supporting a camera of a peeping window, injection blocks for supporting a fluid injection gun, and atmospheric blocks for supporting an atmospheric beam do not wear off during service as rapidly as burner blocks which are exposed to particularly high temperatures. Their positions, however, determined before the building of the frontend may reveal not to be optimal during use of the frontend, at which point it is difficult to change their positions without interrupting production for a considerable period of time. The decision to interrupt the production for a long time must therefore be justified by a substantial advantage in moving the position of a support block. If such is not the case the frontend must be operated with equipment which is not located at optimal positions.

Providing a removable block in a masonry seems *prima facie* pretty obvious, as it suffices to provide a cavity between two blocks of the masonry, and to reversibly insert said support block into the cavity without sealing it with mortar. If this solution applies to a "normal" wall exposed to room temperature, it does not work with a frontend longitudinal wall built at room temperature and exposed to service temperature, hT, temperatures greater than 1000°C, generally of the order of 1200°C, since the blocks of the masonry undergo considerable thermal expansion, thus reducing the dimensions of the cavity, and thus clamping the support block in the cavity. The gap to be left at room temperature between the support block and the surrounding blocks defining the cavity would be too large to ensure that the gap has the required size to allow the removal of the support block at service temperature, hT, of about 1150°C ± 150°C, and sometimes higher.

There therefore remains a need in the art for a more flexible frontend construction allowing support blocks to be exchangeable within the masonry of the longitudinal wall at service temperature, hT, of at least 1000°C. This allows the replacement of damaged burner blocks, and optimization of the position of support blocks for supporting other equipment such as pressure or temperature measurement devices, a peep glass or camera, a gun for injecting a fluid into the passage, an atmospheric beam, and the like.

The present invention proposes a solution for providing exchangeable support blocks in the masonry of the walls of a frontend, which can be reversibly inserted and removed at service temperature greater than 1000°C, and yet ensuring the required seal between the support blocks and the adjacent blocks surrounding it. This and other advantages of the present invention are presented in continuation.

### SUMMARY OF THE INVENTION

The present invention is defined in the appended independent claims. Preferred embodiments are defined in the dependent claims. In particular, the present invention concerns a glass fibre manufacturing plant comprising a front end forming a passage for conveying molten glass and defined by:
- a first and second opposite longitudinal walls having a hot longitudinal wall surface facing said passage and extending along a longitudinal direction, X1, having a longitudinal wall thickness extending along a first transverse direction, X2, normal to X1, and having a longitudinal wall height extending along a second transverse direction, X3, normal to both X1 and X2,
- a ceiling,
- a bottom floor and
- an end wall.

Each longitudinal wall is made of a refractory masonry comprising:
(a) a series of refractory base bricks forming a base wall comprising a top surface for supporting,
(b) two spacer bricks lying on the top surface of the base wall and separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface, wherein,
(c) a lintel (25) of length, WL > Wc, measured along the longitudinal direction, X1, at room temperature and comprising two opposite ends, each resting on one surface of one of the two spacer bricks, thus defining with the top surface of the base wall and the two spacer bricks,
(d) a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(e) a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < Wc, and h < H1c, said hot cuboid portion being reversibly inserted in the cavity, and
(f) a gap surrounding the hot cuboid portion of the support block when positioned in the cavity, said gap being filled with a resilient material,

According to the present invention, the masonry comprises a spacing element hindering the thermal expansion of the two spacer bricks, such that the distance, Wc, between said two spacer bricks measured at room temperature along the longitudinal direction, X1, at the level of the hot longitudinal wall surface cannot be reduced below a predetermined hot cavity width, W, at said service temperature, hT, wherein said predetermined distance, W, is larger than the width, w, of the hot cuboid portion of the support block.

In a preferred embodiment,
(a) The top surface of the base wall forms a planar surface along a base plane (X1, X2),
(b) The two spacer bricks are characterized in that,
   - two opposite edges remote from the base plane and extending in the first transverse direction, X2, are cut off to form a right step at each of said two opposite edges, defining a recessed surface (23R) parallel to the base plane, and a stepping surface extending parallel to X3,
   - at the service temperature (hT) the hot surface has a height, H2, measured along the second transverse direction, X3, and a height, H1, measured up to the recessed surfaces, the stepping surfaces (23S) of the steps thus having a height, HS = H2 - H1,
(c) the two opposite ends of the lintel each rests on one recessed surface of one of the two spacer bricks,

In this embodiment, the spacing element is formed by the lintel resting on the recessed surfaces and resisting the thermal expansion of the stepping surfaces of the two spacer bricks.

Alternatively or additionally, the glass fibre manufacturing plant of the present invention may comprise a base spacer of length equal to the predetermined distance, W, measured at said service temperature, hT, along the first longitudinal direction, which lies on the top surface of the base wall between the two spacer bricks, such that the distance, H1, measured at the service temperature along the second transverse direction, X3, between said base spacer and the lintel is larger than the height, h, of the hot cuboid portion of the support portion, said base spacer thus forming the spacing element.

In an alternative embodiment, the top surface of the base wall forms a merlon of length equal to the predetermined distance, W, measured at said service temperature, hT, along the first longitudinal direction, said merlon separating the two spacer bricks, said merlon thus forming the spacing element.

In yet an alternative embodiment,
(a) The two spacer bricks are characterized in that,
   - two opposite edges adjacent to the top surface of the base wall and extending in the first transverse direction, X2, are cut off to form a right step at each of said two opposite edges, defining a recessed surface parallel to X1, and a stepping surface extending parallel to X3,
   - measured along the second transverse direction, X3, at the service temperature (hT), the hot surface has a total height, H2, and a height, H1, measured down to the recessed surfaces, the step thus having a height, HS = H2 - H1,
(b)the top surface of the base wall forms a merlon of height, HS, measured along the second transverse direction, X3, and of length such that when the merlon contacts the stepping surfaces of the two spacer bricks, the distance between said two spacer bricks measured along the longitudinal direction, X1, at the level of the hot longitudinal wall surface at said service temperature, hT, is equal to the predetermined distance, W.

In this embodiment, the spacing element is formed by the merlon supporting the recessed surfaces of the two spacer bricks and resisting the thermal expansion of the stepping surfaces of the two spacer bricks.

In any of the previous embodiments, the support block can be selected among one of the following:
(a) a burner block for supporting a burner, preferably an oxy-burner;
(b) a measurement block for supporting a pressure or temperature measuring device;
(c) a peep hole block for supporting a viewing device for observing the passage;
(d) a camera block for supporting a camera for taking pictures or videos of the passage,
(e) an injection block for supporting a gun for injecting a fluid at a predetermined location of the passage; or
(f) an atmospheric beam, for controlling the gas flows within the passage

The gap at the level of the hot longitudinal wall surface preferably has an average width, wg1 = ½ (W - w), measured at service temperature, hT, along the longitudinal direction, X1, comprised between 1 and 5 mm, and is preferably equal to 3 ± 1 mm. The gap preferably has an average height, hg = ½ (H1 - h), measured at service temperature, hT, along the second transverse axis, X2, comprised between 1 and 5 mm, and is preferably equal to 3 ± 1 mm.

In order to facilitate the insertion and withdrawal of a support block, in a preferred embodiment, the cavity has tapered walls, with a width, Wt, and/or with a height, H1t, measured at room temperature at the level of a cold surface of the spacer bricks, opposite the hot surface, along the longitudinal direction, X1, and along the second transverse axis, X3, respectively, which are larger than the width, Wc, and height, H1c, measured at the level of the hot longitudinal wall surface, Wt > Wc and/or H1t > H1c

IN one embodiment, the support block is a burner block comprising a cold surface and a hot surface opposite the cold surface, the cold surface being connected to the hot surface by a through-passage extending along a passage axis, Xp, said through-passage comprising three portions:
(a) A burner portion, opening at the cold surface, and having a cross-section suitable for accommodating a burner having a body and a downstream end portion characterized by a large base adjacent to the body, and ending at a small base having a cross-section smaller than the cross-section of the large base;
(b) A flame portion, opening at the hot surface and converging along the passage axis, xp, in the direction of the cold surface until meeting
(c) A joining portion, fluidly joining the flame portion with the burner portion in which it opens with a cross-section of dimensions comprised between the one of the large base and the one of the small base, and wherein
in a top view along a plane (X1, X2), the passage axis, Xp, forms an angle, α, with the longitudinal direction, X1, comprised between 30 and 90°, preferably, between 45° and 90°, more preferably, α = 90°, such that the passage axis, Xp, is parallel to the first transverse direction, X2.

In this embodiment, the burner block preferably further comprises a cold cuboid portion comprising the cold surface and adjacent to the hot cuboid portion, wherein the cross-sectional area normal to the first transverse axis, X2, of the hot cuboid portion is smaller than the one of the cold cuboid portion. An oxy-burner is preferably used with the burner block. An oxy-burner comprises a body extending along the passage axis, Xp, and encloses a fuel line and an oxygen line separate from the fuel line, both fuel line and oxygen line having a separate outlet at or adjacent to a downstream end of the body of the oxy-burner. The downstream end of the oxy-burner body has a trunco-conical geometry which is mounted in the burner portion of the burner block, with the downstream end being located partly in, or adjacent to the joining portion and being oriented towards the passage.

Each longitudinal wall usually comprises at least two cavities, each cavity containing a support block reversibly engaged therein, said at least two cavities being aligned horizontally and separated from one another by at least one spacer brick. The at least two cavities of the first longitudinal wall facing the at least two cavities of the second longitudinal wall preferably in a staggered arrangement. In a practice, a longitunal wall comprises several dozen of cavities. The end wall can also be provided with a cavity containing a support block reversibly engaged therein

The present invention also concerns a method for reversibly loading a support block in a front end of a glass fibre manufacturing plant as defined supra, said method comprising:
(A) building a front end as defined supra, forming a passage for conveying molten glass, wherein building each longitudinal wall comprises:
   (a) laying a series of refractory base bricks to form a base wall comprising a top surface,
   (b) laying two spacer bricks onto the top surface of the base wall, separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface,
   (c) providing a lintel of length, WL > Wc, measured along the longitudinal direction, X1, and comprising two opposite ends, and laying each of the two opposite ends onto one of the two spacer bricks, thus defining with the base wall and the two spacer bricks a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
   (d) providing and installing a spacing element that hinders the thermal expansion of the two spacer bricks, such that the distance, Wc, between said two spacer bricks measured at room temperature along the longitudinal direction, X1, at the level of the hot longitudinal wall surface cannot be reduced below a predetermined distance, W, at a service temperature, hT, of the front end of at least 1000°C, ,
(B) providing a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < W < Wc, and h < H1c < H1, said hot cuboid portion comprising four peripheral surfaces meeting two by two at ridges extending transverse to the first longitudinal direction, X1,
(C) coating the four peripheral surfaces of said hot cuboid portion with a layer of resilient material, and
(D) reversibly inserting into the cavity the hot cuboid portion of the support block, which peripheral surfaces are coated with the resilient material.

The method of the present invention may further comprise the steps of:
(E) removing the support block from the cavity by sliding the hot cuboid portion along the first transverse axis, X2,
(F) removing any resilient material left in the cavity,
(G) reversibly inserting into the cavity the hot cuboid portion of a new support block as defined in (B), which peripheral surfaces are coated with the resilient material.

### BRIEF DESCRIPTION OF THE FIGURES

For a fuller understanding of the nature of the present invention, reference is made to the following detailed description taken in conjunction with the accompanying drawings in which:
Figure 1: shows a front view of a longitudinal wall provided with support blocks according to an embodiment of the present invention.
Figure 2: shows a front view of a longitudinal wall provided with support blocks according to an alternative embodiment of the present invention.
Figure 3: shows a front view of a longitudinal wall provided with support blocks according to an alternative embodiment of the present invention.
Figure 4: shows a front view of a longitudinal wall provided with support blocks according to an alternative embodiment of the present invention.
Figure 5: shows a front view of a longitudinal wall provided with support blocks according to an alternative embodiment of the present invention.
Figure 6: shows a front view of a longitudinal wall provided with support blocks according to an alternative embodiment of the present invention.
Figure 7: shows (a) a cross-section, and (b) a top view of a portion of front end according to the present invention.
Figure 8: shows a perspective view of a support block being inserted into a cavity provided in the masonry of a frontend longitudinal wall according to an embodiment of the present invention.
Figure 9: shows (a) a perspective, partly exploded view of a support block being inserted into a cavity provided in the masonry of a frontend longitudinal wall according to an alternative embodiment of the present invention, and (b) a top view of a cavity according to the embodiment of Figure 8 compared with the one of the embodiment of Figure 9(a).
Figure 10: shows a burner block suitable for the present invention, (a) perspective cross-sectional view, (b) and (c) top cross-sectional views of two embodiments of burner blocks suitable for the present invention.
Figure 11: shows a top cross-sectional view of (a) a burner block suitable for the present invention, and (b) the same burner block with a burner mounted therein.
Figure 12: Compares the variation, L αΔT, of a section of the longitudinal wall of a front end according to the prior art measured along the longitudinal direction, X1, (a) at room temperature (RT), and (b) at service temperature (hT).
.Figure 13: Compares the variation, L αΔT, of a section of the longitudinal wall of a front end according to the present inventiont measured along the longitudinal direction, X1, (a) at room temperature (RT), and (b) at service temperature (hT).

### DETAILED DESCRIPTION OF THE INVENTION

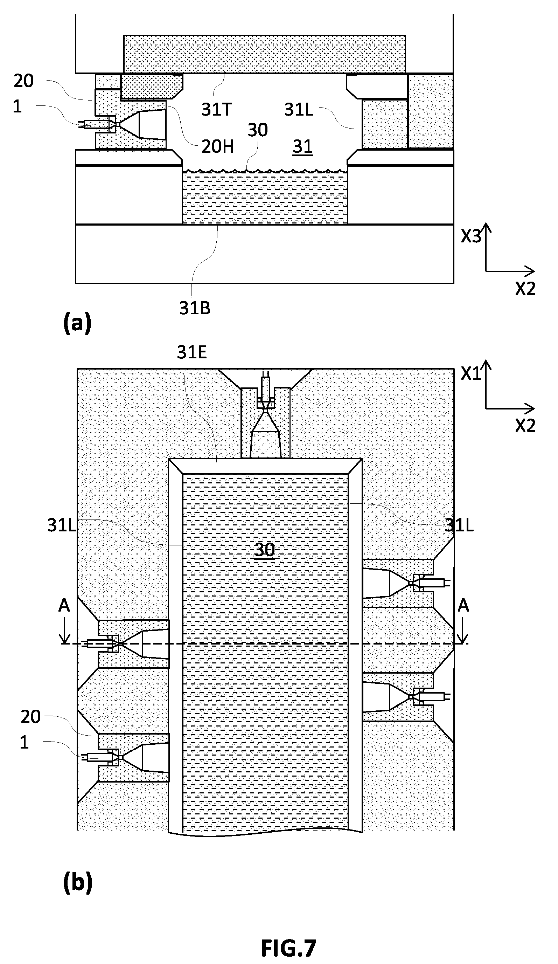

As illustrated in Figure 7, a glass fibre manufacturing plant according to the present invention comprises a front end (31) forming a passage for conveying molten glass (30) and defined by:
- a first and second opposite longitudinal walls (31 L) having a hot longitudinal wall surface facing said passage and extending along a longitudinal direction, X1, having a longitudinal wall thickness extending along a first transverse direction, X2, normal to X1, and having a longitudinal wall height extending along a second transverse direction, X3, normal to both X1 and X2,
- a ceiling (31T),
- a bottom floor (31 B) and
- an end wall (31 E).

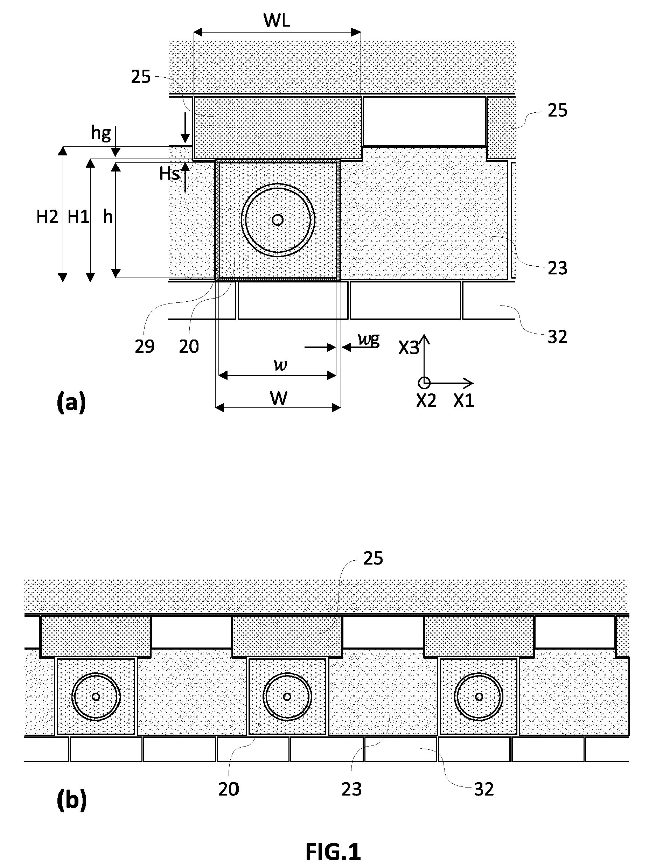

As can be seen in Figures 1 to 6, each longitudinal wall is made of a refractory masonry comprising:
(a) a series of refractory base bricks (32) forming a base wall comprising a top surface for supporting,
(b) two spacer bricks (23) lying on the top surface of the base wall and separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface, wherein,
(c) a lintel (25) of length, WL > Wc, measured along the longitudinal direction, X1, at room temperature and comprising two opposite ends, each resting on one surface of one of the two spacer bricks, thus defining with the top surface of the base wall and the two spacer bricks,
(d) a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(e) a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < Wc, and h < H1c, said hot cuboid portion being reversibly inserted in the prismatic cavity, and
(f) a gap surrounding the hot cuboid portion of the support block when positioned in the cavity, said gap being filled with a resilient material (29).

A cuboid geometry is defined as a convex polyhedron bounded by six quadrilateral faces, whose polyhedral graph is the same as that of a cube. A cuboid bounded by six rectangular faces, with each pair of adjacent faces meeting in a right angle is herein referred to as a "*rectangular cuboid."* This more restrictive type of cuboid is also known as a "*right cuboid."* In other words, if not rectangular, a cuboid may for example be bounded by two or more trapezia. A support block suitable for the present invention preferably has a hot cuboid portion wherein each pair of adjacent faces meet in a right angle. The hot cuboid portion is preferably, but not necessarily, of rectangular cuboid geometry. Indeed, it may also have a slightly tapered geometry with smallest dimensions at the level of the hot longitudinal wall surface, with width, w, and height, h, With such tapered geometry, the insertion into and withdrawal out of a cavity similarly tapered of a support block can be facilitated.

The gist of the present invention consists of a spacing element provided in the masonry which hinders the thermal expansion of the two spacer bricks, such that the distance, Wc, between said two spacer bricks measured at room temperature measured along the longitudinal direction, X1, at the level of the hot longitudinal wall surface cannot be reduced below a predetermined hot cavity width, W, at said service temperature, hT, wherein said predetermined hot cavity width, W, is larger than the width, w, of the hot cuboid portion of the support block. The gap left between the hot cuboid portion of the support block and the walls defining the cavity is filled with a resilient material (29) made of refractory material.

In an embodiment illustrated in Figure 1,
(a) The top surface of the base wall forms a planar surface along a base plane (X1, X2),
(b) The two spacer bricks (23) are characterized in that,
   - two opposite edges remote from the base plane and extending in the first transverse direction, X2, are cut off to form a right step at each of said two opposite edges, defining a recessed surface (23R) parallel to the base plane, and a stepping surface (23S) extending parallel to X3,
   - at the service temperature (hT) the hot surface has a height, H2, measured along the second transverse direction, X3, and a height, H1, measured from the base plane (X1, X2) up to the recessed surfaces, the stepping surfaces (23S) of the steps thus having a height, HS = H2 - H1,
(c) the two opposite ends of the lintel (25) each rests on one recessed surface (23R) of one of the two spacer bricks.

A *"right step*" is defined herein as a step characterized by two planar surfaces, a recessed surface (23R) and a stepping surface (23S), normal to each other. The recessed surface (23R) is substantially parallel to (X1, X2) and the stepping surface (23S) is substantially parallel to (X2, X3).

In this configuration, the spacing element is formed by the lintel (25) resting on the recessed surfaces (23R) and resisting the thermal expansion of the two spacer bricks which stepping surfaces abut against the lintel.. The width, WS, of a right step on either side of a spacer brick is therefore about ½ (WL - Wc), measured along the longitudinal axis, X1, at room temperature.

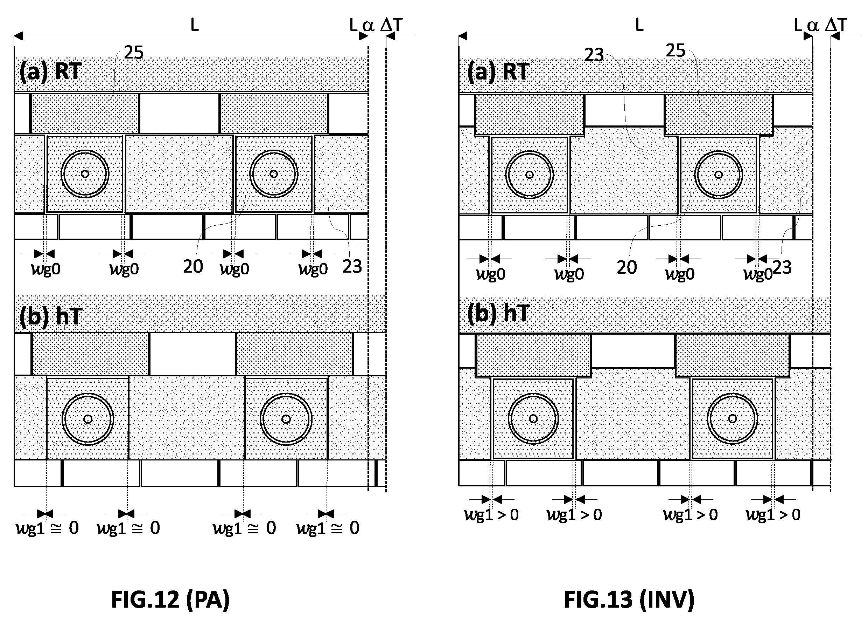

As illustrated in Figures 12(a) and 13(a), the masonry of a longitudinal wall is built at room temperature (RT). Figure 12 illustrates a longitudinal wall section of a traditional front end of the prior art and Figure 13 illustrates a corresponding longitudinal wall section of a front end according to the present invention. Upon heating the frontend to service temperature, hT, of at least 1000°C, generally of the order of 1150° ± 150°C, all the bricks, lintels, etc. of a longitudinal wall (collectively referred to a longitudinal wall components) expand along the three directions, X1, X2, and X3. The most critical expansion component for maintaining the removability of a support block from the longitudinal wall at service temperature, hT, is the longitudinal expansion, ΔL, along the longitudinal direction, X1. As illustrated in Figures 12(b) and 13(b), the longitudinal expansion, ΔL = LαΔT, wherein α is a mean coefficient of expansion of the longitudinal wall's components. The longitudinal wall must be allowed to expand relatively freely, lest pressure concentrations may develop leading to the misalignment of the longitudinal wall's components, which would form an arched longitudinal wall or, worse, the collapse of some of the longitudinal wall's components. Open joints are usually distributed at regular intervals along the longitudinal wall to "absorb" the longitudinal expansion, ΔL, of the order of 5 to 20 mm, of sections of the longitudinal wall.

As can be seen in Figure 12(b), as the longitudinal wall components expand, they will absorb any gap of width, wg0, left during the building at room temperature between two adjacent bricks, and start pushing chain-wise the adjacent components, reducing such gaps to a width at service temperature, wg1 ≃ 0. As a result, the longitudinal walls components which are adjacent to one another along the longitudinal direction are in tight contact with one another forming a compact line of components with substantially no gap between two components. The same applies to the support blocks (20) which are sandwiched in tight contact between two adjacent spacer bricks (23) and cannot be removed from the longitudinal wall at service temperature (hT).

By contrast, as can be seen in Figure 13 illustrating an embodiment of a longitudinal wall according to the present invention, the thermal expansion of the spacer bricks (23) does not bring them into contact with the support blocks sandwiched therebetween, because the expanding spacer bricks contact the spacer elements first (in Figure 13(b) the lintels (25) act as spacer elements), It follows that the gaps, wg0, between a support block (20) and adjacent spacer bricks (23) at room temperature are not reduced to a gap width, wg1, at service temperature (hT), which is close to zero, as is the case in the prior art (cf. Figure 12(b)), but are merely reduced to a positive gap width, 0 < wg1 < wg0 (cf. Figure 1 3(b)). It follows that the support blocks (20) can be withdrawn from between two spacer bricks (23) even at service temperature (hT). As discussed later, the resilient material (29) serves here inter alia to seal the gaps, wg1, left at service temperature (hT) between a support block and adjacent spacer bricks.

This has an enormous advantage in that it is not necessary to cool the frontend, nor to dismantle the masonry surrounding a support block to exchange an old support block with a new one, operation that may last at least one week during which time the frontend activity is interrupted. The support block in a frontend according to the present invention can be exchanged at service temperature, without any dismantling of the bricks forming the masonry surrounding the support block. The exchange of a support block in a frontend of the present invention can be completed in half a day. Although the replacement of the support block per se may be completed in less than an hour, it is necessary, prior to resuming a full volume production rate, to allow time for the frontend to recover stationary thermal and pressure conditions, and to remove all dust of masonry and resilient material which may have fallen into the glass melt during the exchange.

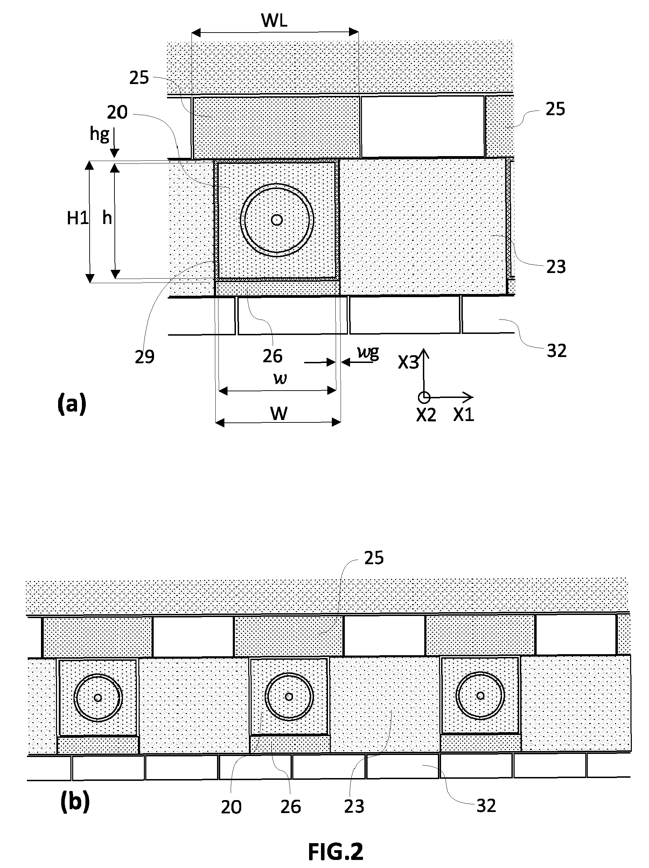

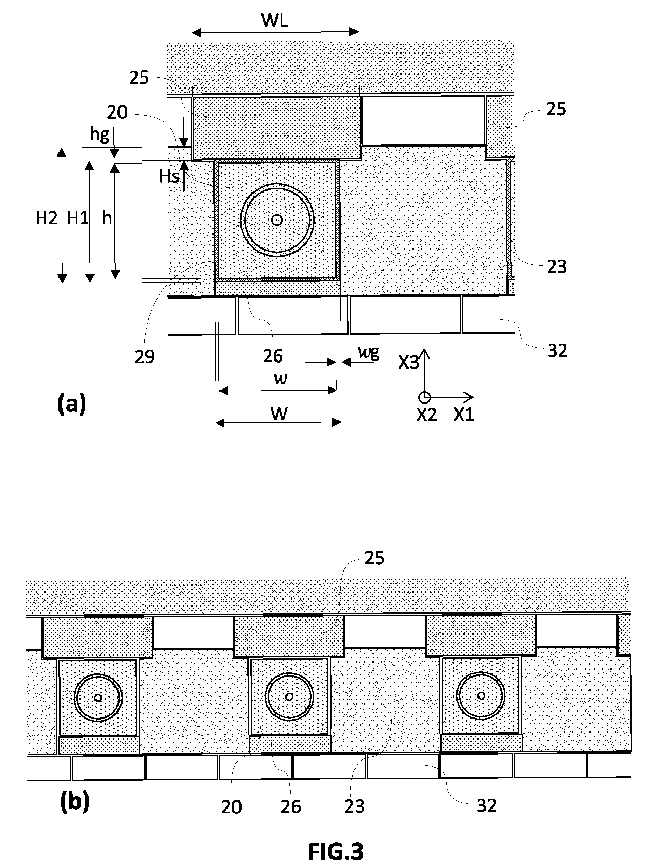

A second embodiment of the present invention, showing an alternative spacing element, is illustrated in Figures 2&3. In this embodiment, which can be used instead of (cf. Figure 2), or in combination with (cf. Figure 3) the embodiment illustrated in Figure 1 and discussed supra, comprises a base spacer (26) forming the spacing element. Said base spacer has a length equal to the predetermined distance, W, measured at said service temperature, hT, along the first longitudinal direction, and it lies on the top surface of the base wall between the two spacer bricks, such that the distance, H1, measured at the service temperature along the second transverse direction, X3, between a top surface of said base spacer and the lintel is larger than the height, h, of the hot cuboid portion of the support portion. In this embodiment, the top surface of the base wall preferably forms a planar surface along a base plane (X1, X2).

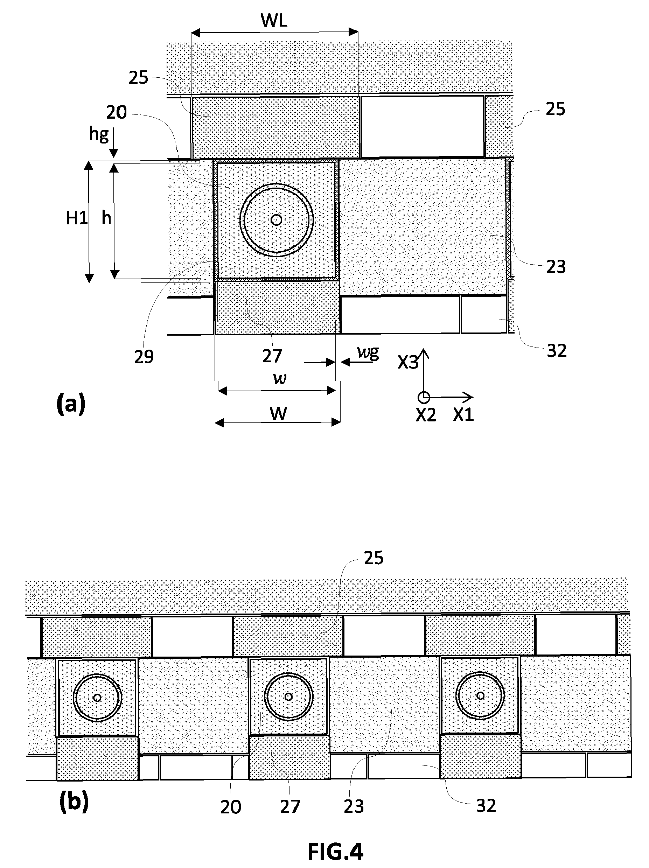

In a variation of the embodiment illustrated in Figure 2, an alternative embodiment illustrated in Figure 4, the top surface of the base wall does not form a planar surface, but is crenelated, forming merlons (27) of length equal to the predetermined distance, W, measured at said service temperature, hT, along the first longitudinal direction. Said merlons separating two spacer bricks actually correspond to a base spacer (26) which is an integral part of the base wall, instead of being laid on top of said base wall. In this embodiment, the spacing elements are formed by the merlons (27), which abut against the lateral walls of the flanking space bricks.

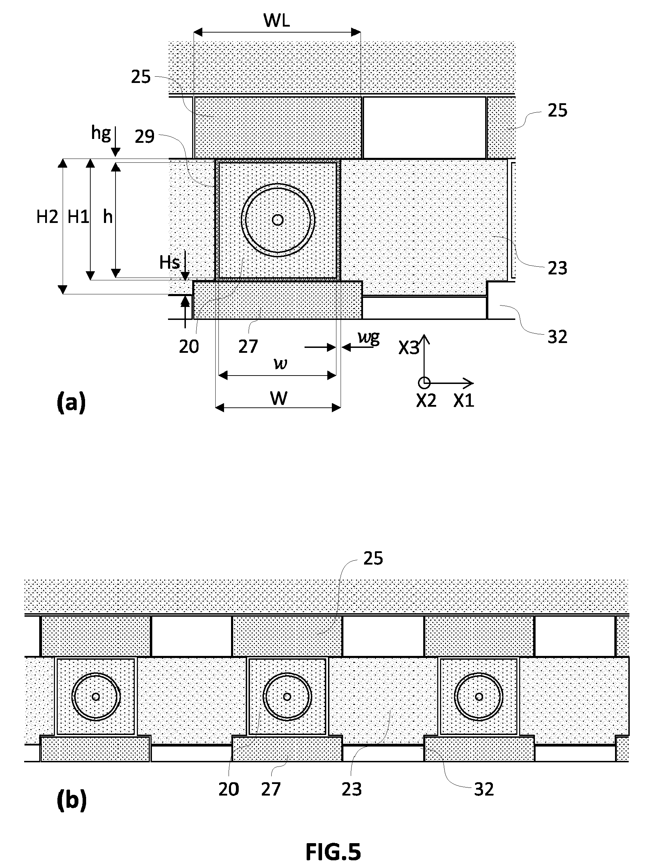

In yet an alternative embodiment, illustrated in Figure 5, the two spacer bricks (23) have a geometry similar to the one discussed with reference to Figure 1, but upside down. They are characterized in that,
- two opposite edges adjacent to the top surface of the base wall and extending in the first transverse direction, X2, are cut off to form a right step at each of said two opposite edges, defining a recessed surface (23R) parallel to X1, and a stepping surface (23S) extending parallel to X3,
- measured along the second transverse direction, X3, at the service temperature (hT), the hot surface has a total height, H2, and a height, H1, measured down to the recessed surfaces, the step thus having a height, HS = H2 - H1,

As shown in Figure 5, the top surface of the base wall forms a merlon (27) of height, HS, measured along the second transverse direction, X3, and of length such that when the merlon contacts the stepping surfaces of the two spacer bricks, the distance between said two spacer bricks measured along the longitudinal direction, X1, at the level of the hot longitudinal wall surface at said service temperature, hT, is equal to the predetermined distance, W. Alternatively, a base spacer (26) can form a merlon on top of a planar top surface of the base wall (not shown).

In this embodiment, the spacing element is formed by the merlon supporting the recessed surfaces (23R) of the two spacer bricks and resisting the thermal expansion of the two spacer bricks by abuting against the stepping surfaces (23S).

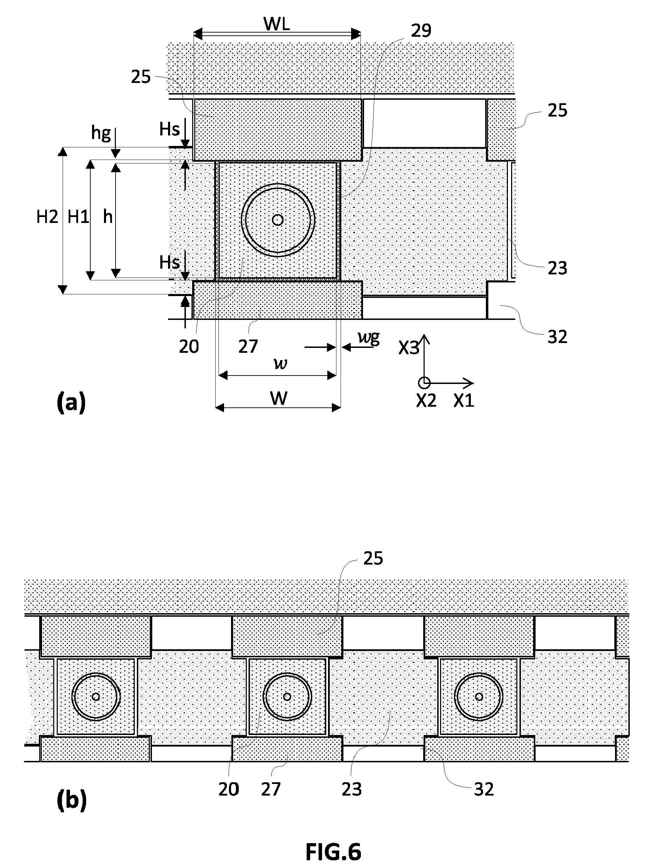

The embodiment, illustrated in Figure 6, is a combination of the embodiments of Figures 1 and 5, wherein the four edges extending in the second transverse direction, X2, of the spacer bricks are cut off to form a right step at each of said four edges, defining two top recessed surfaces (23R) and two bottom recessed surfaces (23R), each parallel to X1, and corresponding to two top stepping surfaces (23S) and two bottom stepping surfaces (23s) each extending substantially parallel to X3. The thermal expansion of the two spacer bricks flanking the two lateral sides of the cavity is hindered, on the one hand, by the lintel resting on the two top recessed surfaces of the top edges and pressing on the top stepping surfaces and, on the other hand, by the merlon (27) formed at the top surface of the base wall and pressing on the bottom stepping surfaces.

Hindering the thermal expansion of the spacer bricks (23) both at the level of the lintel and at the level of the base wall (cf. for example, Figures 3 and 6) is advantageous as it ensures a better control of the cavity dimensions as a function of temperature. But preliminary tests have shown that excellent results were obtained also when thermal expansion was hindered only at the level of the lintel (cf. for example, Figure 1) or of the base wall (cf. for example, Figures 2, 4, and 5).

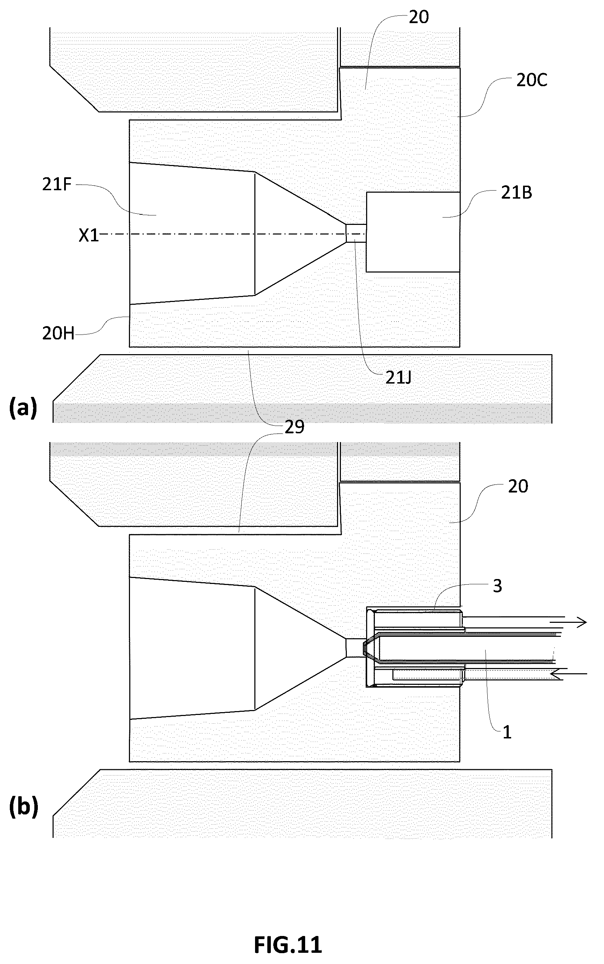

At service temperature, hT, of at least 1000°C, the gap surrounding the hot cuboid portion of the support block when positioned in the cavity has an average width, wg1, defined as wg1 = ½ (W - w), measured along the longitudinal direction, X1, which Is preferably comprised between 1 and 5 mm, and is preferably equal to 3 ± 1 mm. This means that once the spacer bricks flanking either sides of the cavity have thermally expanded as the temperature reached the service temperature, hT, the cavity has a width; W, at the level of the hot longitudinal wall surface, which is still approximately 6 ± 2 mm larger than the width, w, of the hot cuboid portion of the support block, at sevice temperature, hT ((w + 4 mm) ≲ W ≲ (w + 8 mm)). The support block may be slightly misaligned with a gap on one side of the support block being wider than the gap on the other side of the support block. To enhance alignment of the support block in the cavity, guiding ridges may be provided either on the surfaces of the hot cuboid portion of the support block, or on the walls defining the cavity. Alternatively or additionally, matching surfaces may be provided at the level of the cold surfaces (23C) of the spacer bricks, which are substantially colder, between the spacer bricks, lintel and support block, to ensure that the support block is well aligned, as shown for example in Figure 11.

Similarly, at service temperature, hT, the gap surrounding the hot cuboid portion of the support block when positioned in the cavity has an average height, hg, defined as hg = ½ (H1 - h), measured along the second transverse axis, X2, which Is preferably comprised between 1 and 5 mm, and is preferably equal to 3 ± 1 mm. This means that once the whole masonry defining the cavity as well as the spacer block have thermally expanded as the temperature reached the service temperature, hT, the cavity has a height, H1, at the level of the hot longitudinal wall surface, which is still approximately 6 ± 2 mm larger than the height, h, of the hot cuboid portion of the support block, ((h + 4 mm) ≲ H1 ≲ (h + 8 mm)). It is clear that if the hot cuboid portion of the support block simply rested on the bottom floor of the cavity, the gap height above the block would be substantially larger than the gap height below the block. Even with the presence of resilient material filling the gap, it is to be expected that resilient material would be pressed by the weight of the support block, which would eventually move down closer to the floor of the cavity. This is of course undesirable, as the position of the support block must not change during operation. Again, guiding edges may be provided on the floor of the cavity, or matching surfaces may be provided at the level of the cold surfaces (23C) of the spacer bricks, which are substantially colder, between the spacer bricks, lintel and support block, to ensure that the support block is well aligned.

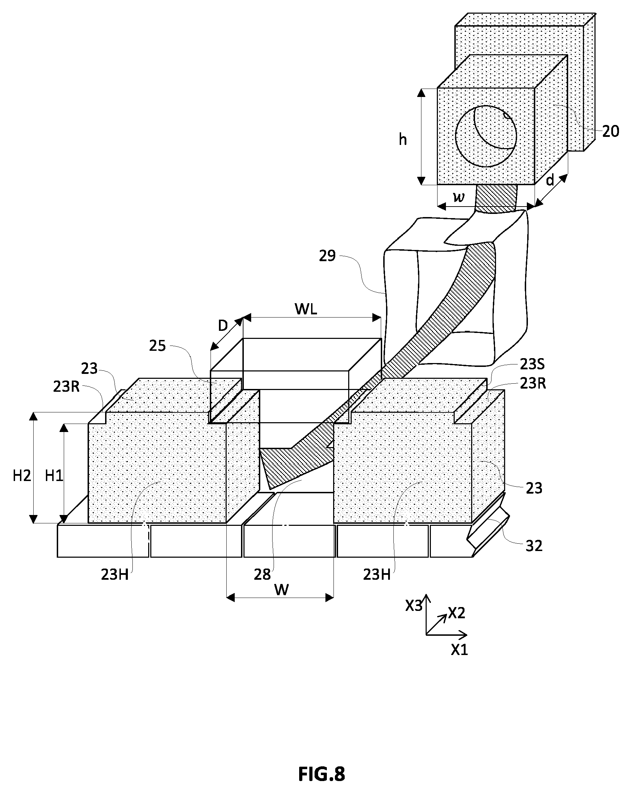

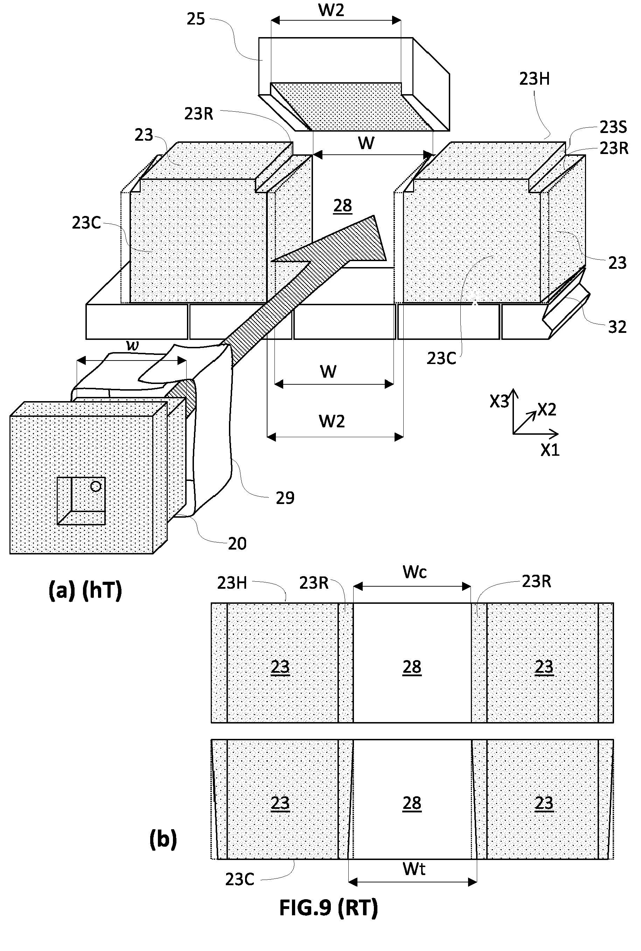

In a preferred embodiment illustrated in Figure 9, the cavity (28) has tapered walls, with a width, Wt, and/or with a height, H1t, measured at room temperature at the level of a cold surface (23C) of the spacer bricks, opposite the hot surface (23H), along the longitudinal direction, X1, and along the second transverse axis, X3, respectively, which is larger than the width, Wc, and height, H1c, measured at the level of the hot longitudinal wall surface, Wt > Wc and/or H1t > H1c. Figure 9(b) compares top views of a cavity having parallel lateral walls as shown in Figure 8 (top drawing) with a cavity having tapered lateral walls as shown in Figure 9(a) (bottom drawing). At room temperature (RT), the spacer bricks (23) are separated from one another at the level of the hot longitudinal wall surface by a distance, Wc, regardless of whether the lateral walls of the cavity are parallel or tapered. At the opposite side of the hot longitudinal wall surface, however, defined by the cold surfaces (23C) of the spacer bricks, the spacer bricks are separated from one another by a distance, Wt, in case of tapered walls, wherein Wt > Wc. The tapered walls allow an easier and self-centred introduction of a support block into the cavity both at room temperature, RT, and at service temperature, hT. As shown in Figure 9(a), the lintel may have a tapered surface defining a cavity height at the level of the cold surfaces of the spacer bricks which is larger than the height, H1, measured at the level of the hot longitudinal wall surface.

As shown in Figures 8 and 9, the resilient material (29) is preferably provided in the form of a sheet, which is wrapped around the four peripheral surfaces of the hot cuboid portion of the support block. The resilient material is preferably made of refractory fibres, typically alumina fibres, or fibres comprising at least 90 wt.%, more preferably at least 95 wt.%, most preferably at least 99 wt.% alumina. The resilient fibres preferably do not comprise more than 2 wt.% silica, and more preferably comprise no silica, as silica may form an eutectic with oxides of adjacent refractory bricks, which could contaminate the glass melt by sublimation at high temperatures. An example of resilient material supplied as a sheet which is suitable for the present invention comprises ceramic fibre paper such as supplied by Morgan Thermal Ceramics.

The resilient material contributes to the proper alignment of the support block within the cavity, but its principal task is to thermally insulate and fluidly seal the hot longitudinal wall surface from the opposite side of the wall defined by the cold surface of the spacer bricks. Absent the resilient material filling the gap, heat from the front end passage would be lost through the gaps of the numerous cavities flanking said passage, creating an unacceptable thermal draft through the gaps in the longitudinal walls and disrupting the temperature and pressure control of the passage.

The support block may be anyone among one of the following:
(a) A burner block for supporting a burner, preferably an oxy-burner;
(b)A measurement block for supporting a pressure or temperature measuring device;
(c) A peep hole block for supporting a viewing device for observing the passage;
(d)A camera block for supporting a camera for taking pictures or videos of the passage,
(e) An injection block for supporting a gun for injecting a fluid at a predetermined location of the passage; or
(f) An atmospheric beam, for controlling the gas flows within the passage

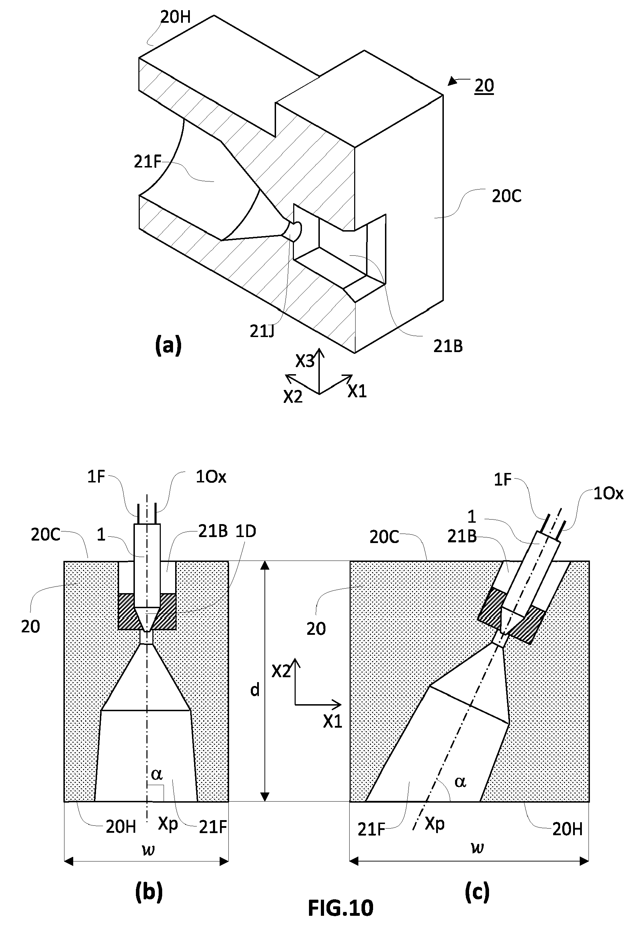

Of all the above types of support blocks, burner blocks are of particular interest because a typical front end may comprise several hundred of such burner blocks aligned on each longitudinal wall. As shown in Figures 8 to 11, a burner block suitable for the present invention may comprise a cold surface (20C) and a hot surface (20H) opposite the cold surface. The cold surface is connected to the hot surface by a through-passage extending along a passage axis, Xp. As shown in Figure 10(a), the through-passage comprises three portions:
(a) A burner portion (21B), opening at the cold surface, and having a cross-section suitable for accommodating a burner (1) having a body and a downstream end portion (1 D) characterized by a large base adjacent to the body, and ending at a small base having a cross-section smaller than the cross-section of the large base;
(b) A flame portion (21F), opening at the hot surface and converging along the passage axis, xp, in the direction of the cold surface until meeting
(c) A joining portion (21J), fluidly joining the flame portion with the burner portion in which it opens with a cross-section of dimensions comprised between the one of the large base and the one of the small base.

A support block and, in particular a burner block, is preferably made of a refractory material composed of at least 95 wt.% alumina, more preferably of at least 99 wt.%. The refractory material of the support block preferably comprises less than 10 wt.% silica, more preferably comprises less than 5 wt.% silica, most preferably comprises less than 2 wt.% silica. The bricks surrounding the cavity may be made of mullite, preferably of alumina enriched mullite.

As shown in the top views along a plane (X1, X2) of Figure 10(b)&(c), the passage axis, Xp, forms an angle, α, with the longitudinal direction, X1, comprised between 30 and 90°, preferably, between 45° and 90°. In Figure 10(b), a burner block having a passage axis, Xp, forming an angle, α = 90°, is illustrated, such that the passage axis, Xp, is parallel to the first transverse direction, X2. In Figure 10(c) an alternative embodiment with a angle, α < 90°, is illustrated, the burner preferably pointing in the direction of the flow of molten glass.

A support block suitable for the present invention and, in particular, a burner block preferably further comprises a cold cuboid portion comprising a cold surface (20C) opposite the hot surface (20H). The cold cuboid portion is coupled to the hot cuboid portion. The cross-sectional area normal to the first transverse axis, X2, of the hot cuboid portion is smaller than the one of the cold cuboid portion. The cold cuboid portion is adjacent to the cold surfaces of the flanking spacer blocks and they are not exposed to high temperatures. Consequently their geometries remain more stable during the heating up of the front end and can be controlled more accurately to ensure that the cold cuboid portion of the support block matches the cavity surfaces adjacent the cold surfaces of the spacer blocks. This way, a support block can be fixed to its predefined service position with a better control of the gap width and height around the hot cuboid portion of the support block.

The cold cuboid portion of a support block may comprise one or several surfaces which are coplanar with peripheral surfaces of the hot cuboid portion. For example the burner block represented in Figure 10(a) comprises three surfaces coplanar with the hot cuboid portion: the bottom surface and the two lateral surfaces. The cold cuboid portions of the burner blocks represented in Figures 8 and 9(a) only have the bottom surface which is coplanar with the bottom surface of the hot cuboid portion. In yet an alternative embodiment, none of the surfaces of the cold cuboid portion is coplanar with any of the peripheral surfaces of the hot cuboid portion.

As shown in Figure 10(b)&(c) and in Figure 11(b), an oxy-burner is a burner comprising a body extending along the passage axis, Xp, and enclosing a fuel line (1F) and an oxygen line (1Ox) separate from the fuel line, both fuel line and oxygen line having a separate outlet at or adjacent to a downstream end (1 D) of the body of the oxy-burner. The downstream end of the oxy-burner body has a cross section decreasing with the distance from the body; often the downstream portion has a conical or trunco-conical geometry. The downstream end can be mounted in the burner portion (21 B) of the burner block, with the downstream end being located partly in, or adjacent to the joining portion (21F) and being oriented towards the passage of the front end. The present invention is particularly adapted for burner blocks supporting an oxy-burner (1) because since the flame of an oxy-burner reaches temperatures much higher than traditional air-burners, the burner blocks wear more rapidly and need changing more regularly. To date, the only two options available when a burner block is damaged is either to condemn it and let one spot without burner during production with the consequent temperature drop at the area surrounding the condemned burner block, or stop production in the front end passage concerned, dismantle the wall surrounding the condemned burner block, build a new wall section with a new burner block, and re-heat the front end passage to service temperature, hT, The latter option requires production to be interrupted for at least one week.

The downstream ends of the oxi-burners are usually partially engaged into the joining portion (21F) of the burner blocks and thus exposed to the service temperature, hT, in the front end. As long as fuel and oxygen flow through the corresponding lines, the downstream ends of the oxy-burners are cooled and kept at a safe temperature. In case of an accidental disruption of the flow of either fuel or oxygen, however, the downstream ends are not cooled anymore and they can get thermally degraded by exposure to the service temperature, hT. For this reason, the downstream end of an oxy-burner can be fluidly cooled with a cooling unit (3). As illustrated in Figure 11(b). such cooling unit (3) may comprise:
- a cooling plate made of a thermally conductive material, defined by a first and a second main surfaces separated by a thickness of said cooling plate, and by an aperture extending through said thickness and having a geometry matching the geometry of the downstream end of the oxy-burner to form a thermal contact therewith; and
- a cooling channel defined by walls and comprising an inlet and an outlet for circulating a refrigerating fluid, in thermal contact with the cooling plate.

Generally, each longitudinal wall comprises at least two cavities (28), each cavity containing a support block (20) reversibly engaged therein. In case of burner blocks, each longitudinal wall comprises dozens, even hundreds of burner blocks. The at least two cavities are aligned horizontally and separated from one another by at least one spacer brick (23). It is preferred that the at least two cavities of the first longitudinal wall face the at least two cavities of the second longitudinal wall in a staggered arrangement. The end wall is likely preferably also provided with a cavity containing a support block (20) reversibly engaged therein.

A front end according to the present invention is greatly advantageous over front ends of the prior art. As discussed above, in case a burner block is thermally damaged, instead of at least one week of interruption of the production in a front end of the prior art, a burner block can be changed in a front end according to the present invention with less than half a day interruption of the production: about a quarter of to half an hour to remove the damaged burner block, clean the cavity and replace the burner block by a new one, and a couple of hours to restore the thermal and pressure conditions disrupted during the change, as well as to give time to the glass melt to evacuate any dust from the refractory bricks and resilient material that may have fallen into the melt during the changing operation.

Other kinds of support blocks, such as a measurement block, a peep hole block or camera block, an injection block; or an atmospheric beam, for controlling the gas flows within the passage, may not be numerous and may not be exposed as intensely to thermal damages as burner blocks, in particular for supporting oxy-firing burners, but their positions may be required to vary more often depending on the actual behaviour of the front end, which may deviate from the expected behaviour, and thus may require such support blocks at other positions than initially planned. Of course, with an interruption of at least one week with prior art front ends, it would be excluded to change the position of a support block only to get a hopefully better position. With a front end according to the present invention, on the other hand, the position of such support blocks may be changed more easily.

A support block can be reversibly loaded in a front end of a glass fibre manufacturing plant as discussed supra, by a method comprising:
(A) building a front end as defined supra and illustrated in Figure 7, forming a passage for conveying molten glass (30) and defined by:
   - a first and second opposite longitudinal walls (31 L) having a hot longitudinal wall surface facing said passage and extending along a longitudinal direction, X1, having a longitudinal wall thickness extending along a first transverse direction, X2, normal to X1, and having a longitudinal wall height extending along a second transverse direction, X3, normal to both X1 and X2,
   - a ceiling (31T),
   - a bottom floor (31 B) and
   - an end wall (31 E),
   wherein building each longitudinal wall comprises:
   (a) laying a series of refractory base bricks (32) to form a base wall comprising a top surface,
   (b) laying two spacer bricks (23) onto the top surface of the base wall, separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface,
   (c) providing a lintel (25) of length, WL > Wc, measured along the longitudinal direction, X1, and comprising two opposite ends, and laying each of the two opposite ends onto one of the two spacer bricks, thus defining with the base wall and the two spacer bricks a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
   (d) providing and installing a spacing element that hinders the thermal expansion of the two spacer bricks, such that the distance, Wc, between said two spacer bricks measured at room temperature along the longitudinal direction, X1, at the level of the hot longitudinal wall surface cannot be reduced below a predetermined distance, W, at a service temperature, hT, of the front end of at least 1000°C, ,
(B) providing a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < W < Wc, and h < H1c < H1, said hot cuboid portion comprising four peripheral surfaces meeting two by two at ridges extending transverse to the first longitudinal direction, X1,
(C) as illustrated in Figures 8 and 9(a), coating the four peripheral surfaces of said hot cuboid portion with a layer of resilient material (29), preferably in the form of a sheet, and
(D) reversibly inserting into the cavity the hot cuboid portion of the support block, which peripheral surfaces are coated with the resilient material.

Figure 8 illustrates the method defined supra with a burner block seen from the passage of the front end, i.e., looking at the hot surfaces of the spacer bricks (23), whilst Figure 9(a) illustrates the same method seen from the opposite side of a longitudinal wall, looking at the cold surfaces (23C) of the spacer bricks (23). The cavity illustrated in Figure 9(a) has tapered walls as discussed supra, to facilitate insertion and removal of a support block.

Once in place in a cavity, a support block can easily be removed therefrom as follows:
(E) removing the support block from the cavity by sliding the hot cuboid portion along the first transverse axis, X2,
(F) removing any resilient material left in the cavity,
(G) reversibly inserting into the cavity the hot cuboid portion of a new support block as defined in (B), which peripheral surfaces are coated with the resilient material.

| REF | DESCRIPTION |
|---|---|
| 1 | burner or oxy-burner |
| 1D | downstream end of oxy-burner |
| 1F | Fuel line of oxy-burner |
| 1Ox | oxygen line of oxy-burner |
| 20 | burner block |
| 20C | cold surface of burner block |
| 20H | hot surface of burner block |
| 21B | burner portion of through-passage |
| 21F | flame portion of through-passage |
| 21J | joining portion of through-passage |
| 23 | spacer brick |
| 23C | cold surface of spacer brick |
| 23H | hot surface of spacer brick |
| 23R | recessed surface of spacer brick |
| 23S | stepping surface of spacer brick (parallel to X3) |
| 25 | lintel |
| 26 | base spacer |
| 27 | merlon formed by top surface of base wall and separating the spacer bricks |
| 28 | cavity |
| 29 | resilient material |
| 30 | molten glass |
| 31 | passage |
| 31B | passage bottom floor |
| 31E | passage end wall |
| 31L | passage longitudinal wall |
| 31T | passage ceiling |
| 32 | base brick |
| h | height of the hot cuboid portion of the support block |
| H1 | height of the cavity measured at service temperature, hT, at level of hot longitudinal wall surface |
| H1c | height of the cavity measured at room temperature, RT, at level of hot longitudinal wall surface |
| H1t | height of the cavity measured at room temperature, RT, at level of cold longitudinal wall surface in cavity having tapered walls |
| H2 | total height of the space brick measured at service temperature, hT |
| H2c | total height of the space brick measured at room temperature, RT |
| hg | height of the gap between support block and cavity measured at service temperature (hT), hg = H1 - h |
| Hs | height of stepping surface measured at service temperature, hT, Hs = H2 - H1 |
| W | hot cavity width at level of hot longitudinal wall surface at service temperature |
| w | width of the hot cuboid portion of the support block |
| W2 | cavity width at level of cold surfaces of spacer bricks along X1 at service temperature |
| Wc | cavity width at level of hot longitudinal wall surface at room temperature |
| Wg1 | width of the gap between support block and cavity measured at service temperature (hT), wg1 = W-w |
| Wh | cavity width at level of hot longitudinal wall surface at service temperature for prior art cavity (unrestrained thermal expansion of spacer bricks). |
| WL | lintel length in the longitudinal direction, X1 |
| Wt | cavity width at level of cold longitudinal wall surface at room temperature in cavity having tapered walls |
| ΔWh | = ½ (Wc - Wh) = unrestrained thermal expansion |
| ΔW | = ½ (Wc - W) = restrained thermal expansion |

## Claims

1. Glass fibre manufacturing plant comprising a front end (31) forming a passage for conveying molten glass (30) and defined by:
- a first and second opposite longitudinal walls (31L) having a hot longitudinal wall surface facing said passage and extending along a longitudinal direction, X1, having a longitudinal wall thickness extending along a first transverse direction, X2, normal to X1, and having a longitudinal wall height extending along a second transverse direction, X3, normal to both X1 and X2,
- a ceiling (31T),
- a bottom floor (31B) and
- an end wall (31E),
wherein each longitudinal wall is made of a refractory masonry comprising:
(a) a series of refractory base bricks (32) forming a base wall comprising a top surface for supporting,
(b) two spacer bricks (23) lying on the top surface of the base wall and separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface, wherein,
(c) a lintel (25) of length, WL > Wc, measured along the longitudinal direction, X1, at room temperature and comprising two opposite ends, each resting on one surface of one of the two spacer bricks, thus defining with the top surface of the base wall and the two spacer bricks,
(d) a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(e) a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < Wc, and h < H1c, said hot cuboid portion being reversibly inserted in the cavity, and
(f) a gap surrounding the hot cuboid portion of the support block when positioned in the cavity, said gap being filled with a resilient material (29),
**characterized in that,** the masonry comprises a spacing element hindering the thermal expansion of the two spacer bricks, such that the distance, Wc, between said two spacer bricks measured at room temperature along the longitudinal direction, X1, at the level of the hot longitudinal wall surface cannot be reduced below a predetermined hot cavity width, W, at said service temperature, hT, wherein said predetermined distance, W, is larger than the width, w, of the hot cuboid portion of the support block.

2. Glass fibre manufacturing plant according to claim 1, wherein,
(a) The top surface of the base wall forms a planar surface along a base plane (X1, X2),
(b) The two spacer bricks (23) are **characterized in that**,
• two opposite edges remote from the base plane and extending in the first transverse direction, X2, are cut off to form a right step at each of said two opposite edges, defining a recessed surface (23R) parallel to the base plane, and a stepping surface (23S) extending parallel to X3,
• at the service temperature (hT) the hot surface has a height, H2, measured along the second transverse direction, X3, and a height, H1, measured up to the recessed surfaces, the stepping surfaces (23S) of the steps thus having a height, HS = H2 - H1,
(c) the two opposite ends of the lintel (25) each rests on one recessed surface (23R) of one of the two spacer bricks,
wherein the spacing element is formed by the lintel (25) resting on the recessed surfaces (23R) and resisting the thermal expansion of the stepping surfaces (23S) of the two spacer bricks.

3. Glass fibre manufacturing plant according to claim 1 or 2, wherein a base spacer (26) of length equal to the predetermined distance, W, measured at said service temperature, hT, along the first longitudinal direction, lies on the top surface of the base wall between the two spacer bricks, such that the distance, H1, measured at the service temperature along the second transverse direction, X3, between said base spacer and the lintel is larger than the height, h, of the hot cuboid portion of the support portion, said base spacer thus forming the spacing element.

4. Glass fibre manufacturing plant according to claim 1, wherein the top surface of the base wall forms a merlon (27) of length equal to the predetermined distance, W, measured at said service temperature, hT, along the first longitudinal direction, said merlon separating the two spacer bricks, said merlon thus forming the spacing element.

5. Glass fibre manufacturing plant according to claim 1, wherein
(a) The two spacer bricks (23) are **characterized in that**,
• two opposite edges adjacent to the top surface of the base wall and extending in the first transverse direction, X2, are cut off to form a right step at each of said two opposite edges, defining a recessed surface (23R) parallel to X1, and a stepping surface (23S) extending parallel to X3,
• measured along the second transverse direction, X3, at the service temperature (hT), the hot surface has a total height, H2, and a height, H1, measured down to the recessed surfaces, the step thus having a height, HS = H2 - H1,
(b)the top surface of the base wall forms a merlon (27) of height, HS, measured along the second transverse direction, X3, and of length such that when the merlon contacts the stepping surfaces of the two spacer bricks, the distance between said two spacer bricks measured along the longitudinal direction, X1, at the level of the hot longitudinal wall surface at said service temperature, hT, is equal to the predetermined distance, W.
wherein the spacing element is formed by the merlon (27) supporting the recessed surfaces (23R) of the two spacer bricks and resisting the thermal expansion of the stepping surfaces (23S) of the two spacer bricks.

6. Glass fibre manufacturing plant according to any one of claims 1 to 5, wherein the support block is selected among one of the following:
(a) A burner block for supporting a burner, preferably an oxy-burner;
(b)A measurement block for supporting a pressure or temperature measuring device;
(c) A peep hole block for supporting a viewing device for observing the passage;
(d)A camera block for supporting a camera for taking pictures or videos of the passage,
(e) An injection block for supporting a gun for injecting a fluid at a predetermined location of the passage; or
(f) An atmospheric beam, for controlling the gas flows within the passage.

7. Glass fibre manufacturing plant according to anyone of the preceding claims, wherein the gap at the level of the hot longitudinal wall surface has an average width, wg1 = ½ (W - w), measured at service temperature, hT, along the longitudinal direction, X1, comprised between 1 and 5 mm, and is preferably equal to 3 ± 1 mm, and wherein the gap preferably has an average height, hg = ½ (H1 - h), measured at service temperature, hT, along the second transverse axis, X2, comprised between 1 and 5 mm, and is preferably equal to 3 ± 1 mm.

8. Glass fibre manufacturing plant according to anyone of the preceding claims, wherein the cavity (28) has tapered walls, with a width, Wt, and/or with a height, H1t, measured at room temperature at the level of a cold surface (23C) of the spacer bricks, opposite the hot surface (23H), along the longitudinal direction, X1, and along the second transverse axis, X3, respectively, which is larger than the width, Wc, and height, H1c, measured at the level of the hot longitudinal wall surface, Wt > Wc and/or H1t > H1c.

9. Glass fibre manufacturing plant according to claim 6, wherein the support block is a burner block comprising a cold surface (20C) and a hot surface (20H) opposite the cold surface, the cold surface being connected to the hot surface by a through-passage extending along a passage axis, Xp, said through-passage comprising three portions:
(a) A burner portion (21B), opening at the cold surface, and having a cross-section suitable for accommodating a burner (1) having a body and a downstream end portion (1D) **characterized by** a large base adjacent to the body, and ending at a small base having a cross-section smaller than the cross-section of the large base;
(b)A flame portion (21 F), opening at the hot surface and converging along the passage axis, xp, in the direction of the cold surface until meeting
(c) A joining portion (21J), fluidly joining the flame portion with the burner portion in which it opens with a cross-section of dimensions comprised between the one of the large base and the one of the small base, and wherein
in a top view along a plane (X1, X2), the passage axis, Xp, forms an angle, α, with the longitudinal direction, X1, comprised between 30 and 90°, preferably, between 45° and 90°, more preferably, α = 90°, such that the passage axis, Xp, is parallel to the first transverse direction, X2.

10. Glass fibre manufacturing plant according to claim 9, wherein the burner block further comprises a cold cuboid portion comprising the cold surface and adjacent to the hot cuboid portion, wherein the cross-sectional area normal to the first transverse axis, X2, of the hot cuboid portion is smaller than the one of the cold cuboid portion.

11. Glass fibre manufacturing plant according to claim 9 or 10, wherein an oxy-burner (1) comprising a body extending along the passage axis, Xp, and enclosing a fuel line (1F) and an oxygen line (1Ox) separate from the fuel line, both fuel line and oxygen line having a separate outlet at or adjacent to a downstream end (1D) of the body of the oxy-burner, said downstream end of the oxy-burner body having a trunco-conical geometry is mounted in the burner portion of the burner block, with the downstream end being located partly in, or adjacent to the joining portion (21F) and being oriented towards the passage.

12. Glass fibre manufacturing plant according to any one of the preceding claims, wherein each longitudinal wall comprises at least two cavities (28), each cavity containing a support block (20) reversibly engaged therein, said at least two cavities being aligned horizontally and separated from one another by at least one spacer brick (23), the at least two cavities of the first longitudinal wall facing the at least two cavities of the second longitudinal wall preferably in a staggered arrangement, the end wall being preferably also provided with a cavity containing a support block (20) reversibly engaged therein.

13. Method for reversibly loading a support block (20) in a front end of a glass fibre manufacturing plant according to any one of the preceding claims, said method comprising:
(A) building a front end as defined in claim 1, forming a passage for conveying molten glass (30) and defined by:
- a first and second opposite longitudinal walls (31L) having a hot longitudinal wall surface facing said passage and extending along a longitudinal direction, X1, having a longitudinal wall thickness extending along a first transverse direction, X2, normal to X1, and having a longitudinal wall height extending along a second transverse direction, X3, normal to both X1 and X2,
- a ceiling (31T),
- a bottom floor (31B) and
- an end wall (31E),
wherein building each longitudinal wall comprises:
(a) laying a series of refractory base bricks (32) to form a base wall comprising a top surface,
(b) laying two spacer bricks (23) onto the top surface of the base wall, separated from one another at the level of the hot longitudinal wall surface by a distance, Wc, measured at room temperature (RT) along the longitudinal direction, X1, each spacer brick having a cuboid geometry comprising a hot surface (23H) forming a portion of the hot longitudinal wall surface,
(c) providing a lintel (25) of length, WL > Wc, measured along the longitudinal direction, X1, and comprising two opposite ends, and laying each of the two opposite ends onto one of the two spacer bricks, thus defining with the base wall and the two spacer bricks a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(d) providing and installing a spacing element that hinders the thermal expansion of the two spacer bricks, such that the distance, Wc, between said two spacer bricks measured at room temperature along the longitudinal direction, X1, at the level of the hot longitudinal wall surface cannot be reduced below a predetermined distance, W, at a service temperature, hT, of the front end of at least 1000°C, ,
(B) providing a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < W < Wc, and h < H1c < H1, said hot cuboid portion comprising four peripheral surfaces meeting two by two at ridges extending transverse to the first longitudinal direction, X1,
(C) coating the four peripheral surfaces of said hot cuboid portion with a layer of resilient material (29), and
(D) reversibly inserting into the cavity the hot cuboid portion of the support block, which peripheral surfaces are coated with the resilient material.

14. Method according to claim 13, further comprising the steps of:
(E) removing the support block from the cavity by sliding the hot cuboid portion along the first transverse axis, X2,
(F) removing any resilient material left in the cavity,
(G) reversibly inserting into the cavity the hot cuboid portion of a new support block as defined in (B), which peripheral surfaces are coated with the resilient material.

## Amended claims

### Amended claims in accordance with Rule 137(2) EPC.

1. Glass fibre manufacturing plant comprising a front end (31) forming a passage for conveying molten glass (30) and defined by:
- a first and second opposite longitudinal walls (31 L) having a hot longitudinal wall surface facing said passage and extending along a longitudinal direction, X1 , having a longitudinal wall thickness extending along a first transverse direction, X2, normal to X1, and having a longitudinal wall height extending along a second transverse direction, X3, normal to both X1 and X2,
- a ceiling (31T),
- a bottom floor (31 B) and
- an end wall (31 E),
wherein each longitudinal wall is made of a refractory masonry comprising:
(a) a series of refractory base bricks (32) forming a base wall comprising a top surface for supporting,
(b) two spacer bricks (23) lying on the top surface of the base wall and separated from one another at the level of the hot longitudinal wall surface by a distance, Wc, measured at room temperature (RT) along the longitudinal direction, X1 , each spacer brick having a cuboid geometry comprising a hot surface (23H) forming a portion of the hot longitudinal wall surface, wherein,
(c) a lintel (25) of length, WL > Wc, measured along the longitudinal direction, X1, at room temperature and comprising two opposite ends, each resting on one surface of one of the two spacer bricks, thus defining with the top surface of the base wall and the two spacer bricks,
(d) a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(e) a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < Wc, and h < H1c, said hot cuboid portion being reversibly inserted in the cavity, and
(f) a gap surrounding the hot cuboid portion of the support block when positioned in the cavity, said gap being filled with a resilient material (29),
**characterized in that**, the masonry comprises a spacing element hindering the thermal expansion of the two spacer bricks, such that the distance, Wc, between said two spacer bricks measured at room temperature along the longitudinal direction, X1, at the level of the hot longitudinal wall surface cannot be reduced below a predetermined hot cavity width, W, at said service temperature, hT, wherein said predetermined distance, W, is larger than the width, w, of the hot cuboid portion of the support block.

2. Glass fibre manufacturing plant according to claim 1, wherein,
(a) The top surface of the base wall forms a planar surface along a base plane (X1, X2),
(b) The two spacer bricks (23) are **characterized in that**,
• two opposite edges remote from the base plane and extending in the first transverse direction, X2, are cut off to form a right step at each of said two opposite edges, defining a recessed surface (23R) parallel to the base plane, and a stepping surface (23S) extending parallel to X3,
• at the service temperature (hT) the hot surface has a height, H2, measured along the second transverse direction, X3, and a height, H1, measured up to the recessed surfaces, the stepping surfaces (23S) of the steps thus having a height, HS = H2 - H1 ,
(c) the two opposite ends of the lintel (25) each rests on one recessed surface (23R) of one of the two spacer bricks,
wherein the spacing element is formed by the lintel (25) resting on the recessed surfaces (23R) and resisting the thermal expansion of the stepping surfaces (23S) of the two spacer bricks.

3. Glass fibre manufacturing plant according to claim 1 or 2, wherein a base spacer (26) of length equal to the predetermined distance, W, measured at said service temperature, hT, along the first longitudinal direction, lies on the top surface of the base wall between the two spacer bricks, such that the distance, H1, measured at the service temperature along the second transverse direction, X3, between said base spacer and the lintel is larger than the height, h, of the hot cuboid portion of the support portion, said base spacer thus forming the spacing element.

4. Glass fibre manufacturing plant according to claim 1, wherein the top surface of the base wall forms a merlon (27) of length equal to the predetermined distance, W, measured at said service temperature, hT, along the first longitudinal direction, said merlon separating the two spacer bricks, said merlon thus forming the spacing element.

5. Glass fibre manufacturing plant according to claim 1, wherein
(a) The two spacer bricks (23) are **characterized in that**,
• two opposite edges adjacent to the top surface of the base wall and extending in the first transverse direction, X2, are cut off to form a right step at each of said two opposite edges, defining a recessed surface (23R) parallel to X1, and a stepping surface (23S) extending parallel to X3,
• measured along the second transverse direction, X3, at the service temperature (hT), the hot surface has a total height, H2, and a height, H1, measured down to the recessed surfaces, the step thus having a height, HS = H2 - H1 ,
(b)the top surface of the base wall forms a merlon (27) of height, HS, measured along the second transverse direction, X3, and of length such that when the merlon contacts the stepping surfaces of the two spacer bricks, the distance between said two spacer bricks measured along the longitudinal direction, X1, at the level of the hot longitudinal wall surface at said service temperature, hT, is equal to the predetermined distance, W.
wherein the spacing element is formed by the merlon (27) supporting the recessed surfaces (23R) of the two spacer bricks and resisting the thermal expansion of the stepping surfaces (23S) of the two spacer bricks.

6. Glass fibre manufacturing plant according to any one of claims 1 to 5, wherein the support block is selected among one of the following:
(a) A burner block for supporting a burner, preferably an oxy-burner;
(b)A measurement block for supporting a pressure or temperature measuring device;
(c) A peep hole block for supporting a viewing device for observing the passage;
(d)A camera block for supporting a camera for taking pictures or videos of the passage,
(e) An injection block for supporting a gun for injecting a fluid at a predetermined location of the passage; or
(f) An atmospheric beam, for controlling the gas flows within the passage.

7. Glass fibre manufacturing plant according to anyone of the preceding claims, wherein the gap at the level of the hot longitudinal wall surface has an average width, wg1 = ½ (W - w), measured at service temperature, hT, along the longitudinal direction, X1, comprised between 1 and 5 mm, and is preferably equal to 3 ± 1 mm, and wherein the gap preferably has an average height, hg = ½ (H1 - h), measured at service temperature, hT, along the second transverse axis, X2, comprised between 1 and 5 mm, and is preferably equal to 3 ± 1 mm.

8. Glass fibre manufacturing plant according to anyone of the preceding claims, wherein the cavity (28) has tapered walls, with a width, Wt, and/or with a height, H1t, measured at room temperature at the level of a cold surface (23C) of the spacer bricks, opposite the hot surface (23H), along the longitudinal direction, X1, and along the second transverse axis, X3, respectively, which is larger than the width, Wc, and height, H1c, measured at the level of the hot longitudinal wall surface, Wt > Wc and/or H1t > H1c.

9. Glass fibre manufacturing plant according to claim 6, wherein the support block is a burner block comprising a cold surface (20C) and a hot surface (20H) opposite the cold surface, the cold surface being connected to the hot surface by a through-passage extending along a passage axis, Xp, said through-passage comprising three portions:
(a) A burner portion (21B), opening at the cold surface, and having a cross-section suitable for accommodating a burner (1) having a body and a downstream end portion (1 D) **characterized by** a large base adjacent to the body, and ending at a small base having a cross-section smaller than the cross-section of the large base;
(b)A flame portion (21 F), opening at the hot surface and converging along the passage axis, xp, in the direction of the cold surface until meeting
(c) A joining portion (21J), fluidly joining the flame portion with the burner portion in which it opens with a cross-section of dimensions comprised between the one of the large base and the one of the small base, and wherein
in a top view along a plane (X1, X2), the passage axis, Xp, forms an angle, α, with the longitudinal direction, X1, comprised between 30 and 90°, preferably, between 45° and 90°, more preferably, α = 90° , such that the passage axis, Xp, is parallel to the first transverse direction, X2.

10. Glass fibre manufacturing plant according to claim 9, wherein the burner block further comprises a cold cuboid portion comprising the cold surface and adjacent to the hot cuboid portion, wherein the cross-sectional area normal to the first transverse axis, X2, of the hot cuboid portion is smaller than the one of the cold cuboid portion.

11. Glass fibre manufacturing plant according to claim 9 or 10, wherein an oxy-burner (1) comprising a body extending along the passage axis, Xp, and enclosing a fuel line (1F) and an oxygen line (10x) separate from the fuel line, both fuel line and oxygen line having a separate outlet at or adjacent to a downstream end (1 D) of the body of the oxy-burner, said downstream end of the oxy-burner body having a truncoconical geometry is mounted in the burner portion of the burner block, with the downstream end being located partly in, or adjacent to the joining portion (21F) and being oriented towards the passage.

12. Glass fibre manufacturing plant according to any one of the preceding claims, wherein each longitudinal wall comprises at least two cavities (28), each cavity containing a support block (20) reversibly engaged therein, said at least two cavities being aligned horizontally and separated from one another by at least one spacer brick (23), the at least two cavities of the first longitudinal wall facing the at least two cavities of the second longitudinal wall preferably in a staggered arrangement, the end wall being preferably also provided with a cavity containing a support block (20) reversibly engaged therein.

13. Method for reversibly loading a support block (20) in a front end of a glass fibre manufacturing plant according to any one of the preceding claims, said method comprising:
(A) building a front end as defined in claim 1, forming a passage for conveying molten glass (30) and defined by:
- a first and second opposite longitudinal walls (31 L) having a hot longitudinal wall surface facing said passage and extending along a longitudinal direction, X1 , having a longitudinal wall thickness extending along a first transverse direction, X2, normal to X1, and having a longitudinal wall height extending along a second transverse direction, X3, normal to both X1 and X2,
- a ceiling (31T),
- a bottom floor (31 B) and
- an end wall (31 E),
wherein building each longitudinal wall comprises:
(a) laying a series of refractory base bricks (32) to form a base wall comprising a top surface,
(b) laying two spacer bricks (23) onto the top surface of the base wall, separated from one another at the level of the hot longitudinal wall surface by a distance, Wc, measured at room temperature (RT) along the longitudinal direction, X1 , each spacer brick having a cuboid geometry comprising a hot surface (23H) forming a portion of the hot longitudinal wall surface,
(c) providing a lintel (25) of length, WL > Wc, measured along the longitudinal direction, X1, and comprising two opposite ends, and laying each of the two opposite ends onto one of the two spacer bricks, thus defining with the base wall and the two spacer bricks a cavity (28) of width, Wc, and height, H1c, measured at the level of the hot longitudinal wall surface at room temperature along the longitudinal direction, X1, and along the second transverse axis, X3, respectively, and of depth, Dc, measured at room temperature along the first transverse axis, X2,
(d) providing and installing a spacing element that hinders the thermal expansion of the two spacer bricks, such that the distance, Wc, between said two spacer bricks measured at room temperature along the longitudinal direction, X1, at the level of the hot longitudinal wall surface cannot be reduced below a predetermined distance, W, at a service temperature, hT, of the front end of at least 1000°C, ,
(B) providing a support block (20) comprising a hot cuboid portion having a cuboid geometry of width, w, and height, h, measured along X1 and X3, respectively, at the level of the hot longitudinal wall surface at a service temperature, hT, of the front end of at least 1000°C, and of depth measured along X2 at least equal to D, wherein w < W < Wc, and h < H1c < H1, said hot cuboid portion comprising four peripheral surfaces meeting two by two at ridges extending transverse to the first longitudinal direction, X1,
(C) coating the four peripheral surfaces of said hot cuboid portion with a layer of resilient material (29), and
(D) reversibly inserting into the cavity the hot cuboid portion of the support block, which peripheral surfaces are coated with the resilient material.

14. Method according to claim 13, further comprising the steps of:
(E) removing the support block from the cavity by sliding the hot cuboid portion along the first transverse axis, X2,
(F) removing any resilient material left in the cavity,
(G) reversibly inserting into the cavity the hot cuboid portion of a new support block as defined in (B), which peripheral surfaces are coated with the resilient material.
